# EUROPEAN PATENT APPLICATION

(11) **EP 4 589 707 A1**
(43) Date of publication of application: **23.07.2025**
(21) Application number: 25151901.3
(22) Date of filing: 15.01.2025
(51) Int. Cl.: H01M 10/04, H01M 50/284, H01M 50/519, H01M 50/55

(54) **BATTERY PACK AND METHOD OF MANUFACTURING SUCH**

(30) Priority: 16.01.2024 KR 20240006629
(71) Applicant: SAMSUNG SDI CO., LTD., Yongin-si, Gyeonggi-do 17084 (KR)
(72) Inventor: Park, Seokryun, 17084 Yongin-si, Gyeonggi-do (KR)
(74) Representative: Gulde & Partner

(57) **Abstract**

Provided is a battery pack. The battery pack comprises a battery cell extending in a vertical direction and comprising a plurality of electrode tabs, a substrate on which a protective element is arranged, the substrate being fixed to an upper end of the battery cell and electrically connected to the plurality of electrode tabs, and a support plate that is disposed between the battery cell and the substrate and that supports the substrate, wherein the support plate comprises at least two partial support portions that are spaced apart from each other in a horizontal direction, the horizontal direction crossing the vertical direction.

## Description

### CROSS-REFERENCE TO RELATED APPLICATIONS

The present application claims priority and the benefit of Korean Patent Application No. 10-2024-0006629, filed on January 16, 2024, in the Korean Intellectual Property Office, the entire disclosure of which is incorporated herein by reference.

### FIELD

One or more embodiments relates to a battery pack and a method of manufacturing such a battery pack.

### BACKGROUND

A secondary battery may be repeatedly charged and discharged, unlike a primary battery that cannot be recharged. Secondary batteries which have low capacity are typically used in a small-sized electronic devices that are portable such as a smartphone, a feature phone, a laptop computer, a digital camera, and a camcorder, and secondary batteries which have large capacity are widely used as a power source for driving a motor in a hybrid vehicle, an electric vehicle, etc. and as a battery for storing electric power. Such a secondary battery includes an electrode assembly including a positive electrode and a negative electrode, a case accommodating the electrode assembly, and an electrode terminal connected to the electrode assembly.

The above information disclosed in this Background section is only for enhancement of understanding of the background of the present disclosure and therefore it may contain information that does not form the related art that is already known to a person of ordinary skill in the art.

### SUMMARY

One or more embodiments include a battery pack including a support plate capable of supporting a substrate of a protective circuit module and preventing damage to the substrate.

However, the technical purpose to be solved by the present disclosure is not limited to the above, and other objects not mentioned herein will be clearly understood by those skilled in the art from the following disclosure.

Additional aspects will be set forth in part in the description which follows and, in part, will be apparent from the description, or may be learned by practice of the presented embodiments of the present disclosure.

According to one or more embodiments, a battery pack comprises a battery cell extending in a vertical direction and comprising a plurality of electrode tabs, a substrate on which a protective element is arranged, the substrate being fixed to an upper end of the battery cell and electrically connected to the plurality of electrode tabs, and a support plate that is disposed between the battery cell and the substrate, and that supports the substrate, wherein the support plate includes at least two partial support portions that are spaced apart from each other in a horizontal direction, the horizontal direction crossing the vertical direction.

The substrate, the support plate, and the battery cell may be sequentially arranged along the vertical direction from an upper portion of the battery pack toward a lower portion of the battery pack.

The substrate may include a first surface to which the plurality of electrode tabs are connected, and a second surface, on which the support plate is arranged, opposite to the first surface.

A first support portion and a second support portion of the at least two partial support portions may be arranged at opposite end portions of the substrate in the horizontal direction.

The protective element may be arranged on the second surface of the substrate.

A thickness of the first support portion and a thickness of the second support portion may be greater than a thickness of the protective element.

The first support portion and the second support portion may each have a stepped portion in direction toward the substrate.

The protective element may be arranged on the first surface of the substrate.

The partial support portions may include a third support portion that is formed at a position along the horizontal direction corresponding to the protective element with the substrate therebetween in the vertical direction, the third support portion being formed so as to have a width greater than a width of the protective element in the horizontal direction.

The partial support portions may include a stepped portion in direction toward the substrate.

The support plate may expose the substrate between the partial support portions.

According to some embodiments, there is provided a method of manufacturing a battery pack, the method comprising: providing a battery cell extending in a vertical direction and comprising a plurality of electrode tabs; fixing a substrate to an upper end of the battery cell; arranging a protective element on the substrate; electrically connecting the substrate to the plurality of electrode tabs; providing a support plate between the battery cell and the substrate to support the substrate, wherein the support plate comprises at least two partial support portions that are spaced apart from each other in a horizontal direction, the horizontal direction crossing the vertical direction.

The providing the support plate may comprise providing the support plate such that the substrate, the support plate, and the battery cell may be sequentially arranged along the vertical direction from an upper portion of the battery pack toward a lower portion of the battery pack.

The substrate may comprise a first surface and a second surface opposite the first surface, electrically connecting the substrate to the plurality of electrode tabs may comprise electrically connecting the plurality of electrode tabs connected to the first surface, and providing the support plate may comprise arranging the support plate on the second surface of the substrate.

The providing the support plate may comprise arranging a first support portion and a second support portion of the at least two partial support portions at opposite end portions of the substrate in the horizontal direction.

The arranging the protective element on the substrate may comprise arranging the protective element on the second surface of the substrate.

A thickness of the first support portion and a thickness of the second support portion may be greater than a thickness of the protective element.

The first support portion and the second support portion may each have a stepped portion in direction toward the substrate.

The arranging the protective element on the substrate may comprise arranging the protective element on the first surface of the substrate.

The partial support portions may include a third support portion that is formed at a position along the horizontal direction corresponding to the protective element with the substrate therebetween in the vertical direction, and the third support portion may be formed so as to have a width greater than a width of the protective element in the horizontal direction.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a perspective view of a battery pack according to some embodiments;
FIG. 2 is a perspective view showing a process of connecting a protective circuit module to an electrode tab according to some embodiments;
FIG. 3 is a perspective view showing a process of applying a force to a protective circuit module according to some embodiments;
FIG. 4 is a perspective view showing a process of arranging a protective circuit module on a battery cell, according to some embodiments;
FIG. 5 is a perspective view showing a state in which a protective circuit module is arranged on a battery cell, according to some embodiments;
FIG. 6 is a conceptual diagram illustrating a protective circuit module according to some embodiments;
FIG. 7 is a conceptual diagram illustrating a protective circuit module according to some embodiments;
FIG. 8 is a conceptual diagram illustrating a stepped structure of a support plate according to some embodiments;
FIG. 9 is a perspective view of a battery pack according to some embodiments;
FIG. 10 is a perspective view showing a process of arranging a protective circuit module on a battery cell, according to some embodiments;
FIG. 11 is a perspective view showing a process of arranging a protective circuit module on a battery cell, according to some embodiments;
FIG. 12 is a perspective view showing a state in which a protective circuit module is arranged on a battery cell, according to some embodiments;
FIG. 13 is a conceptual diagram illustrating a protective circuit module according to some embodiments;
FIG. 14 is a conceptual diagram illustrating a protective circuit module according to some embodiments;
FIG. 15 is a conceptual diagram illustrating a stepped structure of a support plate according to some embodiments;
FIG. 16 is a conceptual diagram illustrating a reinforcement layer according to some embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, one or more embodiments of the present disclosure will be described in detail with reference to accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure. It should be understood that other equivalents and modifications could be made thereto without departing from the spirit and scope of the present disclosure. In addition, it will be further understood that the terms that the terms "comprise or include" and/or "comprising or including, " when used in this specification, specify the presence of stated features, numbers, steps, operations, elements, and/or components, but do not preclude the presence or addition of one or more other features, numbers, steps, operations, elements, components, and/or groups thereof. When the embodiments of the present disclosure are described, the use of "may" signifies "at least of the present disclosure".

In addition, the accompanying drawings are not shown according to the actual scale, to help understand the invention, rather the dimensions of some components may be exaggerated. Furthermore, the same element in different embodiments may be given the same reference numeral.

The term equal refers to 'substantially equal'. Accordingly, substantially equal may include the deviation regarded as a low level in the corresponding technical field, for example, the deviation of 5 % or less. In addition, a uniform parameter in a predetermined area may refer to uniform from the average point of view.

Expressions including ordinal numbers such as "first" and "second" indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

Throughout the specification, the terms "A and/or B" imply A, B, or A and B, unless otherwise defined. That is, the term "and/or" includes all or various combinations of a plurality of items that are related and arranged. The terms "C to D" imply C or more and D or less, unless otherwise described.

A battery pack and/or battery module may include a protective circuit module configured to protect an internal circuit during charging and/or discharging. A protective circuit module may include a substrate on which protective circuit elements are arranged. A protective circuit module may be arranged in a packaging forming the exterior of a battery pack, and/or may be arranged on the packaging of the battery pack. It may be necessary to prevent damage to a protective circuit module due to an external force.

Hereinafter, a battery pack according to one or more embodiments will be described below with reference to accompanying drawings.

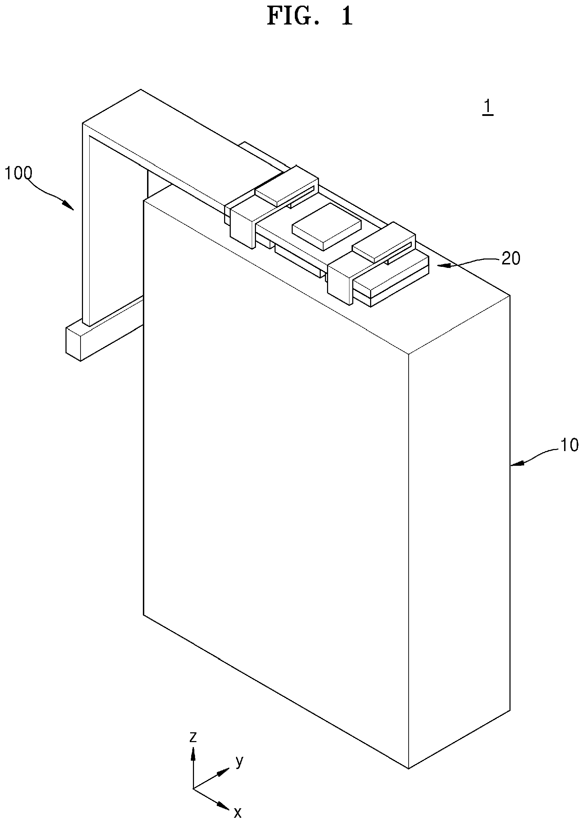

FIG. 1 is a perspective view of a battery pack 1 according to some embodiments.

Referring to FIG. 1, the battery pack 1 may include a battery cell 10 configured to store electric power. The battery cell 10 may comprise a secondary battery. The battery cell 10 may comprise a pouch-type battery. The battery cell 10 may extend in a vertical direction. The vertical direction may denote a first direction. The first direction may be parallel to a z-axis. The kind and shape of the battery cell 10 are not limited to the above description.

The battery pack 1 according to some embodiments may include a protective circuit module 20. The protective circuit module 20 may be configured to protect an internal circuit while the battery cell 10 is charged and/or discharged. In some embodiments, the protective circuit module 20 may be arranged on the battery cell 10. In some embodiments, the protective circuit module 20 may be arranged above the battery cell 10. While charging and/or discharging the battery cell 10, the electric power to/from the battery cell 10 may be transferred via the protective circuit module 20. The protective circuit module 20 may be connected to a connector 100 that is configured to connect the battery cell 10 to an external device. However, functions and performances of the protective circuit module 20 are not limited to the above description.

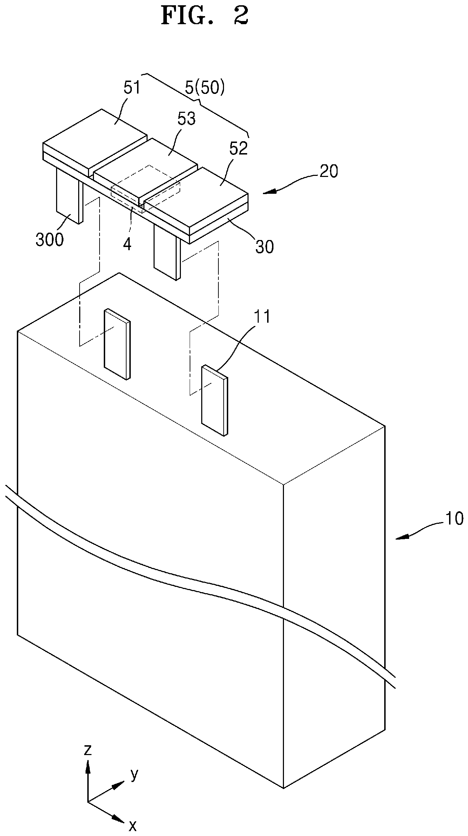

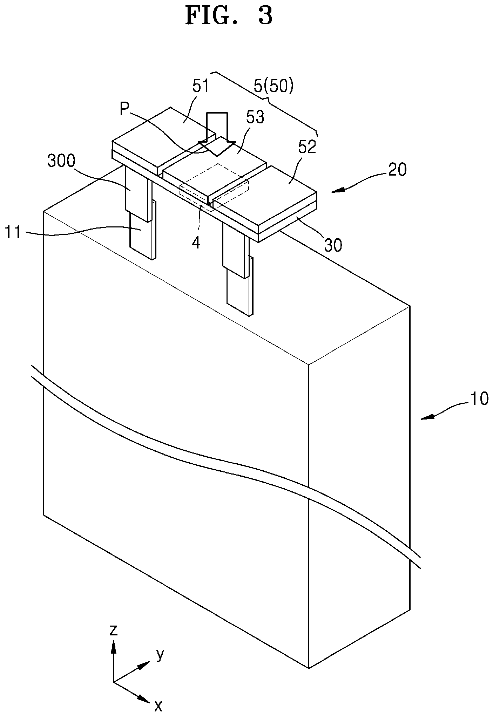

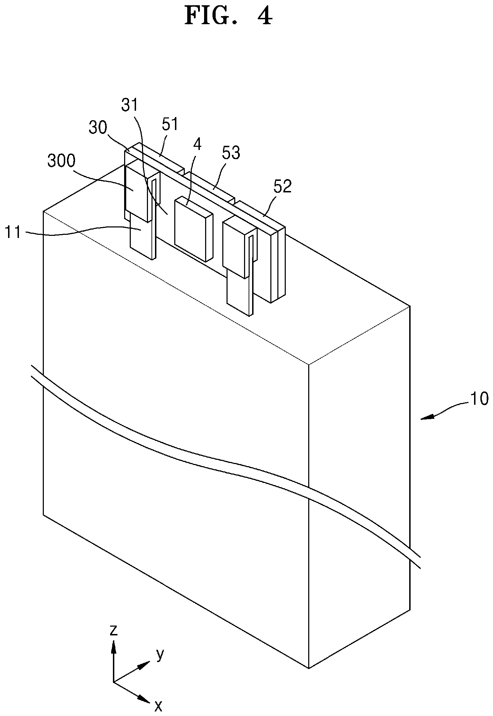

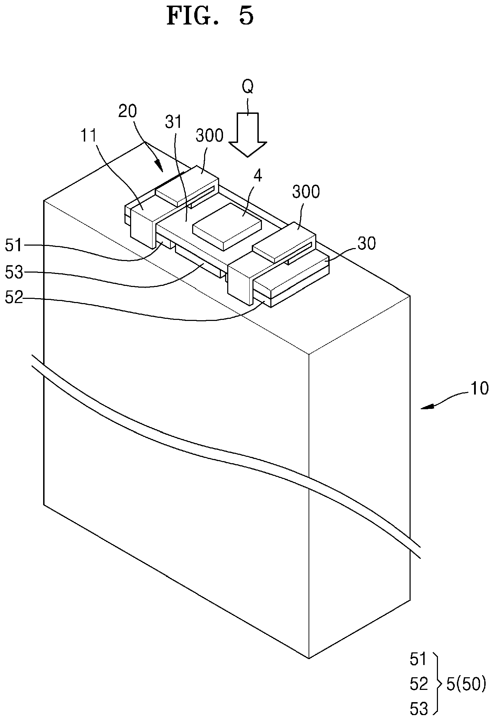

FIG. 2 is a perspective view showing a process of connecting the protective circuit module 20 to an electrode tab 11 according to some embodiments. FIG. 3 is a perspective view showing a process of applying a force P to the protective circuit module 20 according to some embodiments. FIG. 4 is a perspective view showing a process of arranging the protective circuit module 20 on the battery cell 10, according to some embodiments. FIG. 5 is a perspective view showing a state in which the protective circuit module 20 is arranged on the battery cell 10, according to some embodiments.

Referring to FIGS. 2 to 5, the protective circuit module 20 according to the illustrated embodiments may be electrically connected to the electrode tab 11 of the battery cell 10. A process of connecting the protective circuit module 20 to the electrode tab 11 of the battery cell 10 may be necessary. The protective circuit module 20 may include an electrode accommodation portion 300. The electrode accommodation portion 300 may be electrically connected to the electrode tab 11 of the battery cell 10.

The protective circuit module 20 may be electrically connected to the battery pack 1 and arranged on the battery cell 10. Hereinafter, processes of electrically connecting the protective circuit module 20 to the electrode tab 11 of the battery cell 10 and arranging the protective circuit module 20 on the battery cell 10 are described in detail below.

Referring back to FIGS. 1 and 2, the battery cell 10 according to the illustrated embodiments may include a plurality of electrode tabs 11. The electrode tab 11 may comprise a nickel tab. The electrode tab 11 may comprise a flexible electrode tab 11. The electrode tab 11 may be arranged on the battery cell 10. The electrode tab 11 may electrically connect the protective circuit module 20 to the battery cell 10. The protective circuit module 20 may be electrically connected to the battery cell 10 via the electrode tab 11.

The protective circuit module 20 may include a substrate 30. The substrate 30 may be a flexible circuit board 30. The substrate 30 may include a flexible printed circuit board (FPCB). Components of the protective circuit module 20 may be arranged on an upper surface and/or a lower surface of the substrate 30. The lower surface of the substrate 30 may be a surface where the protective circuit module 20 faces the battery cell 10. The upper surface of the substrate 30 may be the other surface opposite to the lower surface. A direction connecting the upper surface and the lower surface to each other may be parallel to the direction in which the battery cell 10 extends. The direction connecting the upper surface and the lower surface to each other may be defined as the first direction. The first direction may be parallel to the z-axis. The kind, arrangement, and configuration of the substrate 30 are not limited to the above description.

The protective circuit module 20 according to the illustrated embodiments may be arranged on the battery cell 10. Arranging of the protective circuit module 20 on the battery cell 10 may denote that the substrate 30 may be arranged on the battery cell 10. Accordingly, the substrate 30 may be arranged on the battery cell 10. The substrate 30 may be arranged on a surface of the upper portion of the battery cell 10. In particular, the substrate 30 may be arranged on the upper surface of the battery cell 10. Arranging of the substrate 30 on the upper surface of the battery cell 10 may denote that a lower surface of the substrate 30 is arranged in a direction facing the battery cell 10. However, the arrangement of the substrate 30 and the battery cell 10 is not limited to the above description.

The substrate 30 according to the embodiment may have a thickness in the vertical direction and a width in the horizontal direction. The substrate 30 may have a thickness in the vertical direction. The vertical direction may be parallel to the direction in which the battery cell 10 extends. The vertical direction may denote the first direction. The vertical direction may be parallel to the z-axis.

As described herein, the substrate 30 may have a width in the horizontal direction. The horizontal direction may cross the direction in which the battery cell 10 extends. The horizontal direction may be perpendicular to the direction in which the battery cell 10 extends. The horizontal direction may denote a second direction crossing the first direction. The horizontal direction may be parallel to an x-axis. However, the shape of the substrate 30 is not limited to the above description.

The protective circuit module 20 according to the embodiment may include a protective element 4 arranged on the substrate 30. The protective element 4 may include an integrated circuit (IC) device. The protective element 4 may denote an IC chip that advantageously allows to minimize the energy consumption, the manufacturing costs and the installation space requirements. The protective element 4 may perform at least some of the circuit protecting functions executed by the protective circuit module 20. However, the function of the protective element 4 is not limited to the above description.

The protective element 4 according to some embodiments may be arranged above the substrate 30. The protective element 4 may be arranged on one surface of the substrate 30. One surface of the substrate 30 may be at least one of the surface of the substrate 30, facing the battery cell 10, and/or the opposite surface. However, the position of the protective element 4 arranged on the substrate 30 is not limited to the above description. For example, the protective element 4 may be arranged on each of the surface of the substrate 30 facing the battery cell 10, and the opposite surface of the substrate 30.

The protective element 4 according to the embodiment may be arranged on a center portion of the substrate 30. The center portion of the substrate 30 may denote a position across the width of the substrate 30 in the horizontal direction. The center portion of the substrate 30 may be spaced apart certain distances from opposite end portions of the substrate 30 in the horizontal direction. However, the position of the protective element 4 arranged on the substrate 30 is not limited to the above description. For example, the protective element 4 may be arranged at one of opposite end portions of the substrate 30.

The protective circuit module 20 according to the embodiment may include a support plate 5. The support plate 5 may be configured to support the substrate 30. The support plate 5 may be arranged on one surface of the substrate 30. The support plate 5 may be provided to protect the substrate 30. The support plate 5 may be provided to protect the protective element 4. Functions and shape of the support plate 5 are described in detail later.

Referring back to FIGS. 2 to 5, the protective circuit module 20 may be arranged above the battery cell 10 by connecting the electrode tab 11 of the battery cell 10 to the substrate 30 and rotating the substrate 30. Arranging of the protective circuit module 20 on the battery cell 10 may denote that the substrate 30 may be arranged above the battery cell 10. Arranging of the protective circuit module 20 on the battery cell 10 may configure at least a part of the process of fixing the protective circuit module 20 onto the battery cell 10.

The protective circuit module 20 may be fixed to the upper end of the battery cell 10. The substrate 30 may be fixed to the upper end of the battery cell 10. Fixing the substrate 30 onto the upper end of the battery cell 10 may include the case in which a member acting as a fixing member and/or a support member intervenes therebetween, as well as the case in which the substrate 30 comes into a direct contact with the upper surface of the battery cell 10.

Referring to FIGS. 3 to 5, in the process of arranging the protective circuit module 20 on the battery cell 10, the substrate 30 may be rotated to face the battery cell 10. During the process of arranging the protective circuit module 20 on the battery cell 10, the substrate 30 may be rotated about the width direction as an axis. During the process of arranging the protective circuit module 20 on the battery cell 10, the substrate 30 may be rotated about the second direction. During the process of arranging the protective circuit module 20 on the battery cell 10, the substrate 30 may be rotated about the X-axis direction. However, the rotation of the substrate 30 during the process of arranging the protective circuit module 20 on the battery cell 10 may not be essential. For example, the substrate 30 may be arranged on the battery cell 10 by connecting the electrode tab 11 to the electrode accommodation portion 300 while the substrate 30 is arranged on the battery cell 10.

The electrode tab 11 of the battery cell 10 and/or the electrode accommodation portion 300 of the substrate 30, according to the embodiment, may include a flexible material. If the substrate 30 is rotated while the electrode tab 11 is electrically connected to the electrode accommodation portion 300, the electrode accommodation portion 300 and/or the electrode tab 11 may change the shapes thereof along the surface of the substrate 30. If the substrate 30 is rotated while the electrode tab 11 is electrically connected to the electrode accommodation portion 300, the electrode accommodation portion 300 and/or the electrode tab 11 may be bent according to the rotating direction of the substrate 30. However, the materials and shapes of the electrode accommodation portion 300 and/or the electrode tab 11 are not limited to the above description.

During the process of arranging the substrate 300 on the battery cell 10, an external force may be applied to the protective circuit module 20. During the process of arranging the substrate 300 on the battery cell 10, an external force may be applied to the substrate 30. During the process of rotating the substrate 30, the external force may be applied to the substrate 30. The direction in which the external force is applied to the substrate 30 may be parallel to the thickness direction of the substrate 30. The external force may be caused by a mechanical operation or force P applied by an operator. However, the external force applied to the substrate 30 is not limited to the above description. For example, after arranging the protective circuit module 20 on the battery cell 10, the external force may be applied to the substrate 30. For example, referring to FIG. 5, an external force Q may be applied from the upper direction of the battery pack 1.

The protective circuit module 20 according to the embodiment may have a thickness of 0.3 mm to 1.5 mm. The thickness of the substrate 30 may be 0.6 mm to 1.3 mm. The thickness of the substrate 30 may be 0.9 mm to 1.1 mm. However, the above thickness of the protective circuit module 20 is an example, and the thickness is not limited thereto. The examples thicknesses of the substrate 30 provided here may be approximate thicknesses. The thickness of the substrate may be ±5% of the example thicknesses provided herein.

If an excessive external force is applied to the substrate 30, the substrate 30 may be damaged. If the excessive external force is applied to the substrate 30, the protective element 4 may be damaged. If the excessive external force is applied to the substrate 30, the substrate 30 may be curved. If the substrate 30 is curved, the protective element 4 may be damaged. Therefore, it may be necessary to prevent damage to the protective circuit module 20 due to the external force.

Hereinafter, functions and structures of the support plate 5 formed to protect the substrate 30 and/or the protective element 4 are described in detail below.

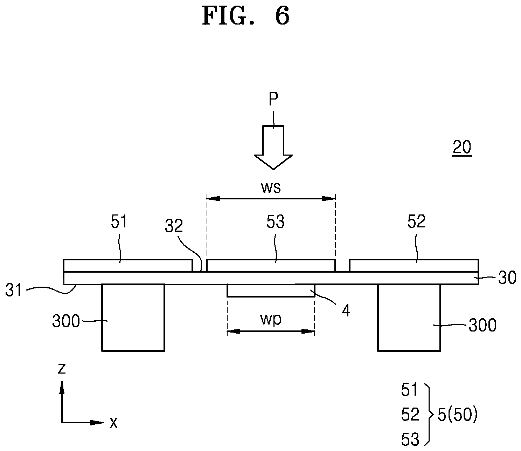

FIG. 6 is a conceptual diagram illustrating the protective circuit module 20 according to some embodiments. FIG. 6 may be a front view showing the protective circuit module 20 of FIG. 3 in a y-axis direction.

Referring to FIG. 5 and FIG. 6, the protective circuit module 20 according to the embodiment may include the support plate 5. The support plate 5 may be arranged on one surface of the substrate 30. The support plate 5 may be arranged on one of the surfaces of the substrate 30 in the vertical direction. The support plate 5 may be arranged on the other surface of the substrate 30 than the surface where the electrode accommodation portion 300 is arranged. The support plate 5 may be arranged in a different direction from that of the electrode accommodation portion 300 on the substrate 30. However, the arrangement of the support plate 5 is not limited to the above description. For example, the support plate 5 may be arranged on both surfaces of the substrate 30 in the upper and lower directions. For example, the support plate 5 may be arranged on the same surface as that on which the electrode accommodation portion 300 is arranged, of the substrate 30.

The support plate 5 according to the embodiment may reinforce the substrate 30. The support plate 5 may bond the substrate 30 to the upper portion of the battery cell 10. The support plate 5 may include a material having greater strength than that of the substrate 30. However, the functions of the support plate 5 are not limited to the above description.

The substrate 30 according to the embodiment may include a second surface 32 and a first surface 31 opposite to the second surface 32. The second surface 32 may be a surface on which the electrode accommodation portion 300 of the substrate 30 is arranged. The second surface 32 may be a surface of the substrate 30, to which the electrode tab 11 is connected. The second surface 32 may be the surface facing the battery cell 10, from among the surfaces of the substrate 30. The second surface 32 may be the surface arranged on the battery cell 10, from among the surfaces of the substrate 30. The second surface 32 may be the surface attached to the battery cell 10, from among the surfaces of the substrate 30. The second surface 32 may be the surface fixed to the battery cell 10, from among the surfaces of the substrate 30. The first surface 31 may be opposite to the second surface 32. The second surface 32 and the first surface 31 may be arranged in (e.g., separated alone) the z-axis direction. The second surface 32 and the first surface 31 may be arranged in (e.g., separated along) the upper and lower directions.

In FIG. 6, the second surface 32 of the substrate 30 faces upward, but referring to FIGS. 3 to 5, it may be easily appreciated that the second surface 32 of the substrate 30 in the battery pack 1 is arranged to face the battery cell 10.

The support plate 5 according to the embodiment may be arranged on the second surface 32 of the substrate 30. The support plate 5 may be attached to the second surface 32 of the substrate 30. The support plate 5 may support the substrate 30 on the second surface 32 of the substrate 30. The support plate 5 may be disposed between the battery cell 10 and the substrate 30. The support plate 5 may be arranged between the battery cell 10 and the substrate 30. The substrate 30, the support plate 5, and the battery cell 10 may be sequentially arranged from the upper portion toward the lower portion. The substrate 30, the support plate 5, and the battery cell 10 may be sequentially arranged in a direction in which the battery cell 10 extends. The substrate 30, the support plate 5, and the battery cell 10 may be sequentially arranged in the first direction. The substrate 30, the support plate 5, and the battery cell 10 may be sequentially arranged in the z-axis direction. However, the arrangement of the substrate 30, the support plate 5, and the battery cell 10 is not limited to the above description.

The protective element 4 according to the embodiment may be arranged on the first surface 31 of the substrate 30. The protective element 4 may be arranged on the surface opposite to the surface of the substrate 30, on which the support plate 5 is arranged. However, the arrangement of the protective element 4 is not limited to the above description. For example, the protective element 4 may be arranged above the second surface 32 of the substrate 30.

Referring to FIGS. 3, 5, and 6, the support plate 5 according to the embodiment may include a partial support portion 50. There may be a plurality of partial support portions 50. Two or more partial support portions 50 may be provided. The partial support portions 50 forming the support plate 5 may be spaced apart from one another in the horizontal direction. The partial support portions 50 may be arranged to be spaced apart from one another in the width direction of the substrate 30 in the horizontal direction. The partial support portions 50 may be arranged on the second surface 32 of the substrate 30 while being spaced apart from one another in the horizontal direction. The horizontal direction may be the width direction of the substrate. The horizontal direction may denote the second direction crossing the first direction, in which the battery cell 10 extends. The horizontal direction may be a direction perpendicular to the direction in which the battery cell 10 extends. The horizontal direction may be parallel to an X-axis. However, the direction in which the partial support portions are spaced apart from one another is not limited to the above description.

The partial support portions 50 according to the embodiment may include a first support portion 51 and a second support portion 52. The first support portion 51 and the second support portion 52 may be arranged at opposite end portions of the substrate 30 in the horizontal direction on the second surface 32 of the substrate 30. The first support portion 51 and the second support portion 52 may be spaced apart a certain distance from each other in the second direction on the second surface 32 of the substrate 30. The first support portion 51 and the second support portion 52 may support the substrate 30 on the second surface 32 of the substrate 30. The first support portion 51 and the second support portion 52 may support the substrate 30 at opposite end portions of the substrate 30 in the horizontal direction.

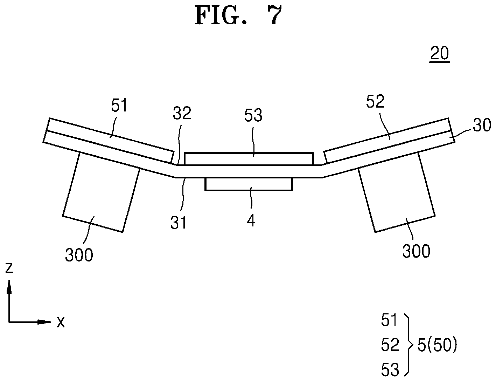

FIG. 7 is a conceptual diagram illustrating the protective circuit module 20 according to some embodiments. FIG. 7 may be a diagram that conceptually describes the change of the protective circuit module 20 if the external force shown in FIG. 3 applies to the protective circuit module 20 shown in FIG. 6.

Referring to FIGS. 5 to 7, the support plate 5 according to the embodiment may disperse the external force applying to the protective circuit module 20. The partial support portions 50 may disperse the external force applying to the substrate 30. The first support portion 51 and the second portion 52 may disperse the external force to the opposite end portions of the substrate 30, if the external force applies to the substrate 30. If the external force applies to the substrate 30, the first support portion 51 and the second support portion 52 may disperse the force in the width direction of the substrate 30. However, the functions of the first support portion 51 and the second support portion 52 are not limited to the above description.

The partial support portions 50 according to the embodiment may include a third support portion 53. The third support portion 53 may be disposed between the first support portion 51 and the second support portion 52. The third support portion 53 may be arranged on the second surface 32 of the substrate 30, between the first support portion 51 and the second support portion 52. The third support portion 53 may prevent damage to the protective element 4 due to the external force applying to the protective circuit module 20.

The protective element 4 according to the embodiment may have a width wp in a direction parallel to the horizontal direction of the substrate 30. The width wp of the protective element 4 may be the width of the protective element 4, which is measured in the direction parallel to the second direction. The second direction may denote a direction perpendicular to the first direction in which the battery cell 10 extends. The width wp of the protective element 4 may be the width of the protective element 4, which is measured in the direction parallel to the x-axis direction.

The third support portion 53 according to the embodiment may have a width ws in a direction parallel to the horizontal direction of the substrate 30. The width ws of the third support portion 53 may denote the width of the third support portion 53, which is measured in a direction parallel to the second direction. The width ws of the third support portion 53 may denote the width of the protective element 4, which is measured in the direction parallel to the x-axis direction.

The third support portion 53 according to the embodiment may be formed to be wider than the width wp of the protective element 4 in the horizontal direction, at a position corresponding to the protective element 4. The width ws of the third support portion 53 may be greater than the width wp of the protective element 4. Opposite end portions of the protective element 4 in the horizontal direction may be within the width ws of the third support portion 53. Opposite end portions of the third support portion 53 in the horizontal direction may be located outside the opposite end portions of the protective element 4 in the horizontal direction. However, the arrangement of the third support portion 53 and the protective element 4 is not limited to the above description.

The third support portion 53 may protect the protective element 4, against the external force applying to the protective circuit module 20. The third support portion 53 may prevent the damage to the protective element 4. The third support portion 53 may prevent the external force applying to the protective circuit module 20 from being transferred to the protective element 4. The third support portion 53 may prevent the external force applying to the substrate 30 from being transferred to the protective element 4. However, the functions of the third support portion 53 are not limited to the above description.

The partial support portions 50 according to the embodiment may be in direct contact with the surface of the substrate 30. The partial support portions 50 may be arranged to be in contact with the second surface 32 of the substrate 30. If the external force applies to the substrate 30, the surface of the substrate 30, which is in contact with the partial support portions 50, may not be flexible.

The partial support portions 50 may effectively disperse the external force applied to the protective circuit module 20. If the external force applies to the substrate 30, the separation space between the partial support portions 50 may disperse the external force applied to the protective circuit module 20. For example, a separation space between the first support portion 51 and the second support portion 52 and/or a separation space between the second support portion 52 and the third support portion 53 may disperse the external force applied to the protective circuit module 20. However, the functions of the partial support portions 50 are not limited to the above description. For example, the partial support portions 50 may protect the substrate 30 against the external force applied to the protective circuit module 20 from the upper direction of the battery pack 1. For example, the partial support portions 50 may protect the protective element 4 against the external force applied to the protective circuit module 20 from the upper direction of the battery pack 1.

The partial support portions 50 according to the embodiment may at least partially expose the substrate 30. The partial support portions 50 may at least partially expose the second surface 32 of the substrate 30. The second surface 32 of the substrate 30 may be at least partially exposed between the separation spaces among the partial support portions 50. However, the partial support portions 50 may not expose the substrate 30, in some embodiments. Hereinafter, embodiments in which the partial support portions 50 do not expose the substrate 30 is described below.

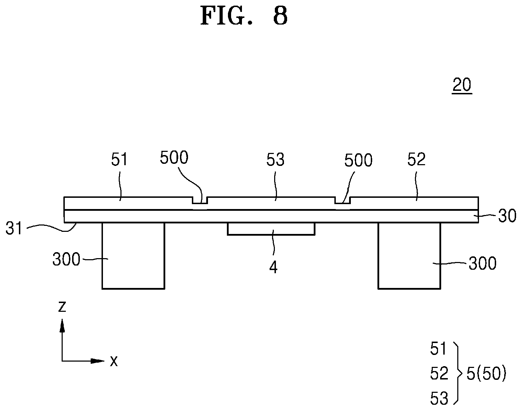

FIG. 8 is a conceptual diagram illustrating a stepped structure 500 of the support plate 5 according to some embodiments.

The support plate 5 according to the embodiment may have stepped structures 500. The partial support portion 50 may have the stepped structure 500. The partial support portion 50 may have the stepped structure 500 in the direction toward the substrate 30. The direction toward the substrate 30 may denote a direction facing the second surface 32 of the substrate 30. The stepped structure 500 may be formed between the partial support portions 50. The stepped structure 500 may be provided between the first support portion 51 and the second support portion 52. The stepped structure 500 may be provided between the first support portion 51 and the third support portion 53. The stepped structure 500 may be provided between the third support portion 53 and the second support portion 52. The stepped structure 500 may connect the first support portion 51 to the third support portion 53. The stepped structure 500 may be formed at a lower level than the surface level of the first support portion 51 and the third support portion 53. The stepped structure 500 may connect the third support portion 53 to the second support portion 52. The surface level of the stepped structure 500 may be lower than the surface level of the third support portion 53 and the second support portion 52. The surface level may denote a distance of the upper surface of the support plate 5 spaced apart from the second surface 32 of the substrate 30. However, the detailed shape of the stepped structure 500 is not limited to the above description. For example, the stepped structure 500 may have a multi-staged structure. The stepped structure 500 may have a plurality of surface levels.

The support plate 5 having the stepped structure 500 may not expose the second surface 32 of the substrate 30. The second surface 32 of the substrate 30 may denote the surface of the substrate 30, on which the support plate 5 is arranged. However, in some embodiments, even if the support plate 5 has the stepped structure 500, the second surface 32 of the substrate 30 may be exposed. For example, a case in which the stepped structure 500 is provided between the partial support portions 50 and a case in which the stepped structure 500 is not provided between the partial support portions 50 may be combined. In this case, the partial support portions 50 that are spaced apart from each other without having the stepped structure 500 may expose the second surface 32 of the substrate 30.

If the external force is applied to the protective circuit module 20, the stepped structure 500 may prevent the excessive force from being applied to the substrate 30. If the external force is applied to the protective circuit module 20, the stepped structure 500 may prevent excessive force from being applied to the protective element 4. The stepped structure 500 may disperse the force applied to the substrate 30. The stepped structure 500 may denote a portion where the force applied to the substrate 30 is concentrated. The stepped structure 500 may prevent the force from concentrating onto the protective element 4. However, the functions of the stepped structure 500 are not limited to the above description.

Hereinafter, a battery pack according to another embodiment, different from the battery pack 1 described above with reference to FIGS. 1 to 8, is described below. Redundant descriptions are omitted, and the differences are described below.

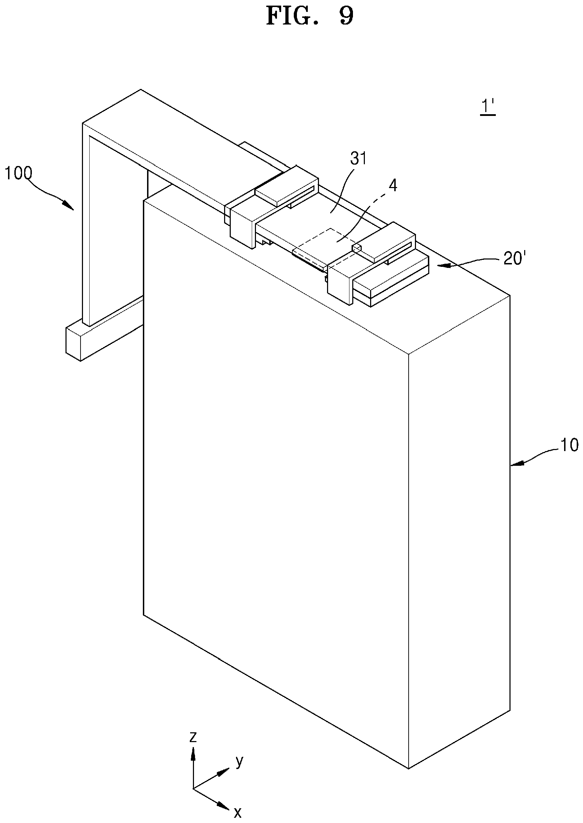

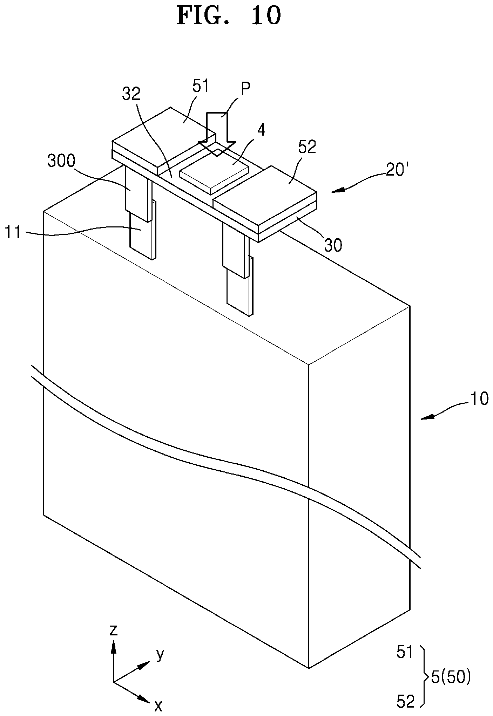

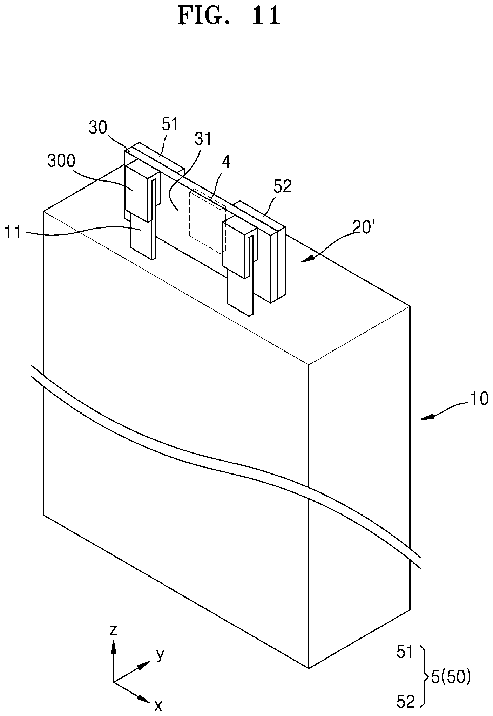

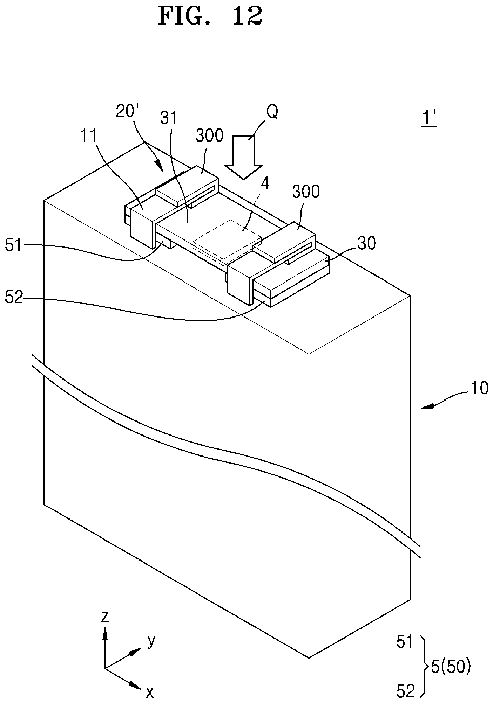

FIG. 9 is a perspective view of a battery pack 1' according to some embodiments. FIG. 10 is a perspective view showing processes of arranging a protective circuit module 20' on the battery cell 10, according to some embodiments. FIG. 11 is a perspective view showing processes of arranging a protective circuit module 20' on the battery cell 10, according to some embodiments. FIG. 12 is a perspective view showing the protective circuit module 20' arranged on the battery cell 10, according to some embodiments.

Referring to FIGS. 9 to 12, a battery module according to the embodiment may include the protective circuit module 20'. The protective circuit module 20' may include the substrate 30 and the protective element 4. The protective element 4 may be arranged on the substrate 30. The protective element 4 may be arranged on the surface of the substrate 30. The substrate 30 may include the first surface 31 to which a plurality of electrode tabs 11 are connected and the second surface 32 opposite to the first surface 31. The protective element 4 may be on the second surface 32. Unlike the example in which the protective element 4 described above with reference to FIGS. 1 to 8 is arranged on the first surface 31 of the substrate 30, the protective element 4 according to the embodiment presently described may be arranged on the second surface 32 of the substrate 30. The protective element 4 may be arranged on the surface opposite to the surface of the substrate 30, on which the electrode tabs 11 are arranged. However, the position of the protective element 4 arranged on the substrate 30 is not limited to the above description. For example, the protective element 4 may be arranged on both the first surface 31 and the second surface 32 of the substrate 30.

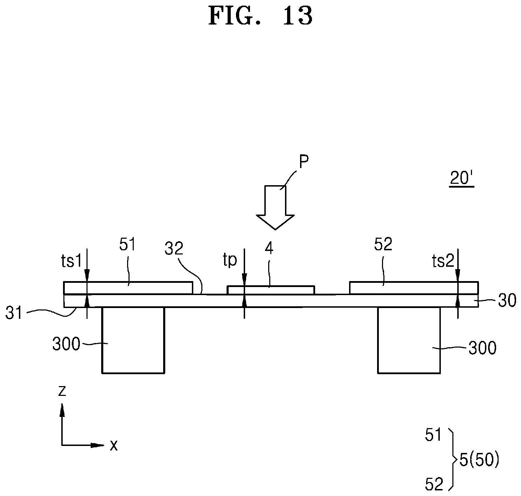

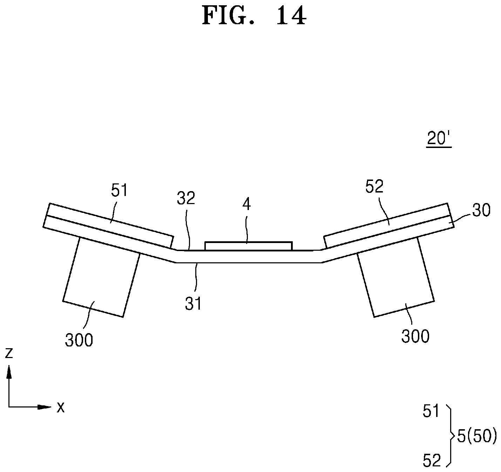

FIG. 13 is a conceptual diagram illustrating the protective circuit module 20' according to some embodiments. The protective circuit module 20' shown in FIG. 13 may differ from the protective circuit module 20 of FIG. 6, in view of the direction in which the protective element 4 is arranged. FIG. 14 is a conceptual diagram illustrating the protective circuit module 20' according to some embodiments. The protective circuit module 20' shown in FIG. 14 may differ from the protective circuit module 20 of FIG. 7, in view of the direction in which the protective element 4 is arranged.

Referring to FIGS. 12 to 14, the protective element 4 according to the embodiment may be arranged on the second surface 32 of the substrate 30. The partial support portions 50 in the support plate 5 may be arranged on the second surface 32 of the substrate 30. The second surface 32 may be the surface of the substrate 30, on which the electrode accommodation portions 300 of the substrate 30 connected to the electrode tabs 11 are arranged. The second surface 32 may be the surface of the substrate 30, which faces the battery cell 10, if the support plate 5 is arranged on the battery cell 10. However, the arrangement of the support plate 5, the protective element 4, and the electrode accommodation portions 300 is not limited to the above description.

The protective element 4 and the protective plate 5 according to the embodiment may be arranged on the same surface of the substrate 30. The protective element 4 and the support plate 5 may be arranged on the second surface 32 of the substrate 30. From among the surfaces of the support plate 5, the surface opposite to the surface located on the substrate 30 may be arranged on the battery cell 10. The support plate 5 may be disposed between the substrate 30 and the upper surface of the battery cell 10. If the protective element 4 is arranged on the same surface of the substrate 30 as the support plate 5, the protective element 4 may not be exposed to the outside of the protective circuit module 20'. The protective element 4 may not be exposed to the outside of the battery pack 1'. Referring to FIG. 12, the protective element 4 is not exposed to the outside of the battery pack 1'. If the protective element 4 is not exposed to the outside of the battery pack 1', the damage to the protective element 4 may be prevented. However, the arrangement of the protective element 4 is not limited to the above description.

Referring back to FIG. 13, a thickness ts of the support plate 5 according to the embodiment may be greater than a thickness tp of the protective element 4. The thickness ts of the partial support portion 50 may be greater than the thickness tp of the protective element 4. A thickness ts1 of the first support portion 51 and a thickness ts2 of the second support portion 52 may be greater than the thickness tp of the protective element 4. However, the thickness tp of the protective element is not limited to the above description.

Referring to FIGS. 12 and 13, the protective element 4 according to the embodiment may not be in direct contact with the upper portion of the battery cell 10. The thickness ts of the support plate 5 may be greater than the thickness tp of the protective element 4 so that the protective element 4 may not come into direct contact with the upper portion of the battery cell 10. If the protective element 4 is not in direct contact with the upper portion of the battery cell 10, damage to the protective element 4 may be prevented if the external force applies to the protective circuit module 20.

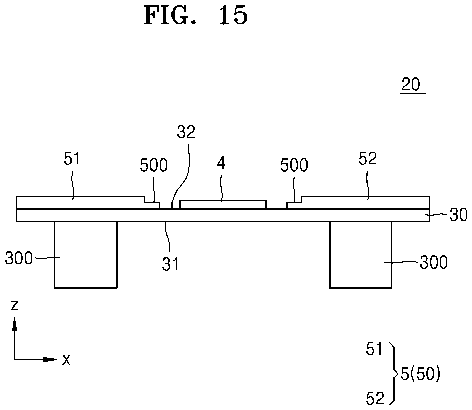

FIG. 15 is a conceptual diagram for illustrating the stepped structure 500 of the support plate 5 according to some embodiments.

Referring to FIG. 15, the partial support portion 50 according to the embodiment may have the stepped structure 500. The partial support portion 50 may have the stepped structure 500 in the direction toward the substrate 30. The first support portion 51 and the second support portion 52 may each have the stepped structure 500. The first support portion 51 and the second support portion 52 may each have the stepped structure 500 in the direction toward the substrate 30. The direction toward the substrate 30 may denote a direction facing the second surface 32 of the substrate 30. The stepped structure 500 may be formed at a lower level than the surface level of the first support portion 51 and the second support portion 52. However, the detailed shape of the stepped structure 500 is not limited to the above description. For example, the stepped structure 500 may have a multi-staged structure. The stepped structure 500 may have a plurality of surface levels.

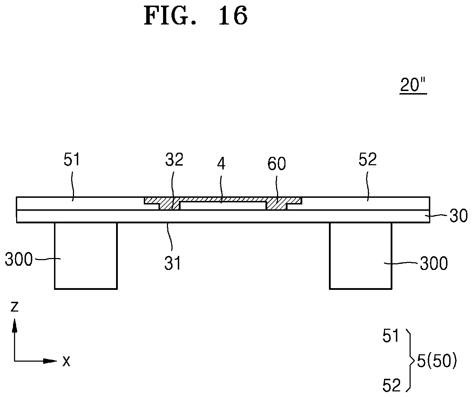

FIG. 16 is a conceptual diagram illustrating a reinforcement layer 60 according to some embodiments.

The protective circuit module 20 according to the embodiment may include a reinforcement layer 60. The reinforcement layer 60 may reinforce the space between the first support portion 51 and the second support portion 52. The reinforcement layer 60 may reinforce at least a part of the substrate 30. The reinforcement may denote reinforcement of the ability of substrate 30 to endure the external force. The reinforcement may denote the reinforcement of hardness and strength of the substrate 30.

The reinforcement layer 60 according to the embodiment may protect the substrate 30. The reinforcement layer 60 may be arranged on the protective element 4 on the substrate 30. The reinforcement layer 60 may protect the protective element 4. The reinforcement layer 60 may be formed so as not to expose the protective element 4 outside of the substrate 30. The reinforcement layer 60 may include a protective coating. The reinforcement layer 60 may include ultraviolet (UV)-coating. However, the material and arrangement of the reinforcement layer 60 are not limited to the above description.

The reinforcement layer 60 may cover the space between the partial support portions 50. The reinforcement layer 60 may be disposed between the first support portion 51 and the second support portion 52. The reinforcement layer 60 may cover the protective element 4 between the first support portion 51 and the second support portion 52. The reinforcement layer 60 may be arranged on the stepped structure 500. However, functions and performances of the reinforcement layer 60 are not limited to the above description. For example, the reinforcement layer 60 may cover the upper surface of the support plate 5. For example, the reinforcement layer 60 may be partially formed between the first support portion 51 and the second support portion 52 so as to partially expose the substrate 30.

According to some embodiments, there is provided a method of manufacturing a battery pack, the method comprising: providing a battery cell extending in a vertical direction and comprising a plurality of electrode tabs; fixing a substrate to an upper end of the battery cell; arranging a protective element on the substrate; electrically connecting the substrate to the plurality of electrode tabs; providing a support plate between the battery cell and the substrate to support the substrate, wherein the support plate comprises at least two partial support portions that are spaced apart from each other in a horizontal direction, the horizontal direction crossing the vertical direction.

The providing the support plate may comprise providing the support plate such that the substrate, the support plate, and the battery cell may be sequentially arranged along the vertical direction from an upper portion of the battery pack toward a lower portion of the battery pack.

The substrate may comprise a first surface and a second surface opposite the first surface, electrically connecting the substrate to the plurality of electrode tabs may comprise electrically connecting the plurality of electrode tabs connected to the first surface, and providing the support plate may comprise arranging the support plate on the second surface of the substrate.

The providing the support plate may comprise arranging a first support portion and a second support portion of the at least two partial support portions at opposite end portions of the substrate in the horizontal direction.

The arranging the protective element on the substrate may comprise arranging the protective element on the second surface of the substrate.

A thickness of the first support portion and a thickness of the second support portion may be greater than a thickness of the protective element.

The first support portion and the second support portion may each have a stepped portion in direction toward the substrate.

The arranging the protective element on the substrate may comprise arranging the protective element on the first surface of the substrate.

The partial support portions may include a third support portion that is formed at a position along the horizontal direction corresponding to the protective element with the substrate therebetween in the vertical direction, and the third support portion may be formed so as to have a width greater than a width of the protective element in the horizontal direction.

According to the present disclosure, the battery pack including the support plate that may protect the protective circuit module is be provided.

According to the present disclosure, the battery pack including the protective circuit module providing excellent mechanical strength is be provided.

Effects obtainable from the present disclosure may be non-limited by the above-mentioned effect. Other unmentioned effects may be clearly understood from the following description by one of ordinary skill in the art to which the present disclosure pertains.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims.

## Claims

1. A battery pack (1, 1') comprising:
a battery cell (10) extending in a vertical direction and comprising a plurality of electrode tabs (11);
a substrate on which a protective element (4) is arranged, the substrate being fixed to an upper end of the battery cell (10) and electrically connected to the plurality of electrode tabs (11); and
a support plate (5) that is disposed between the battery cell (10) and the substrate, and that supports the substrate,
wherein the support plate (5) comprises at least two partial support portions (50) that are spaced apart from each other in a horizontal direction crossing the vertical direction.

2. The battery pack (1, 1') as claimed in claim 1, wherein the substrate, the support plate (5), and the battery cell (10) are sequentially arranged along the vertical direction from an upper portion of the battery pack (1, 1') toward a lower portion of the battery pack (1, 1').

3. The battery pack (1, 1') as claimed in claim 2, wherein the substrate comprises a first surface (31) to which the plurality of electrode tabs (11) are connected, and a second surface (32), on which the support plate (5) is arranged, opposite to the first surface (31).

4. The battery pack (1, 1') as claimed in claim 3, wherein a first support portion (51) and a second support portion of the at least two partial support portions (50) are arranged at opposite end portions of the substrate in the horizontal direction.

5. The battery pack (1, 1') as claimed in claim 4, wherein the protective element (4) is arranged on the second surface (32) of the substrate.

6. The battery pack (1, 1') as claimed in claim 5, wherein a thickness (ts1) of the first support portion (51) and a thickness (ts2) of the second support portion are greater than a thickness (tp) of the protective element (4).

7. The battery pack (1, 1') as claimed in claim 6, wherein the first support portion (51) and the second support portion each have a stepped portion in direction toward the substrate.

8. The battery pack (1, 1') as claimed in claims 4 to 7, wherein the protective element (4) is arranged on the first surface (31) of the substrate.

9. The battery pack (1, 1') as claimed in claims 5 to 8, wherein the partial support portions (50) include a third support portion (53) that is formed at a position along the horizontal direction corresponding to the protective element (4) with the substrate therebetween in the vertical direction, the third support portion (53) being formed so as to have a width (ws) greater than a width(wp) of the protective element (4) in the horizontal direction.

10. The battery pack (1, 1') as claimed in claim 9, wherein the partial support portions (50) include a stepped portion in direction toward the substrate.

11. The battery pack (1, 1') as claimed in claim 9, wherein the support plate (5) exposes the substrate between the partial support portions (50).

12. A method of manufacturing a battery pack (1, 1'), the method comprising:
providing a battery cell (10) extending in a vertical direction and comprising a plurality of electrode tabs (11);
fixing a substrate to an upper end of the battery cell (10);
arranging a protective element (4) on the substrate;
electrically connecting the substrate to the plurality of electrode tabs (11);
providing a support plate (5) between the battery cell (10) and the substrate to support the substrate,
wherein the support plate (5) comprises at least two partial support portions (50) that are spaced apart from each other in a horizontal direction, the horizontal direction crossing the vertical direction.

13. The method as claimed in claim 12, wherein the providing the support plate (5) comprises providing the support plate (5) such that the substrate, the support plate (5), and the battery cell (10) are sequentially arranged along the vertical direction from an upper portion of the battery pack (1, 1') toward a lower portion of the battery pack (1, 1').

14. The method as claimed in claim 13, wherein the substrate comprises a first surface (31) and a second surface (32) opposite the first surface (31), electrically connecting the substrate to the plurality of electrode tabs (11) comprises electrically connecting the plurality of electrode tabs (11) connected to the first surface (31), and providing the support plate (5) comprises arranging the support plate (5) on the second surface (32) of the substrate.

15. The method as claimed in claim 14, wherein providing the support plate (5) comprises arranging a first support portion (51) and a second support portion of the at least two partial support portions (50) at opposite end portions of the substrate in the horizontal direction.
